# EUROPÄISCHE PATENTSCHRIFT

(11) **EP 3 630 433 B1**
(45) Veröffentlichungstag und Bekanntmachung des Hinweises auf die Patenterteilung: **06.12.2023**
(21) Anmeldenummer: 18715681.5
(22) Anmeldetag: 04.04.2018
(51) Int. Cl.: C09D 11/32, C04B 41/00, C04B 41/49, C04B 41/52, C04B 41/64, C04B 41/71, C09D 11/037, B28B 11/00, B28B 11/04, B41M 1/12, B41M 1/26, B41M 5/00

(54) **VERFAHREN ZUR HERSTELLUNG EINES BEDRUCKTEN BETONELEMENTS**
METHOD FOR PRODUCING A PRINTED CONCRETE ELEMENT
PROCÉDÉ DE FABRICATION D'UN ÉLÉMENT EN BÉTON IMPRIMÉ

(30) Priorität: 02.06.2017 DE 102017005280
(43) Veröffentlichungstag der Anmeldung: 08.04.2020
(73) Patentinhaber: METTEN Stein + Design GmbH & Co. KG, 51491 Overath (DE); NANO-X GmbH, 66130 Saarbrücken (DE)
(72) Erfinder: METTEN, Michael, 51467 Bergisch Gladbach (DE); VOLMER, Guido, 59597 Erwitte (DE); SEPEUR, Stefan, 66787 Wadgassen (DE); MUTH, Alexandra, 66450 Bexbach (DE)
(74) Vertreter: Cohausz & Florack
(86) Internationale Anmeldenummer: PCT/EP2018/058551
(87) Internationale Veröffentlichungsnummer: WO 2018/219525

(56) Entgegenhaltungen:
- EP-A1- 3 515 999
- WO-A1-2016/134728
- WO-A1-2017/021284
- DE-A1-102006 014 900
- JP-A- 2007 038 416

## Beschreibung

Die Erfindung betrifft ein Betonelement sowie ein Verfahren zur Herstellung des bedruckten Betonelements.

Die vielfältige Gestaltung von Betonelementen ermöglicht es, den Baustoff Beton für anspruchsvolle Bauprojekte und ästhetisch ansprechende Oberflächen zu nutzen. Insbesondere die farbliche Gestaltung und Bedruckung von Betonelementen hat sich als nützliche Technik zur Ausgestaltung von Beton erwiesen. Allerdings sind eine Vielzahl von Herausforderungen bei der Ausgestaltung von Betonelementen zu berücksichtigen, wie beispielsweise die Schwierigkeit, eine gute Haftung von Materialien auf dem Beton zu erreichen. Außerdem stellt sich bei der Ausgestaltung des Betons das Problem, dass der bereits ausgehärtete Beton schwierig zu gestalten ist, aber viele Materialien nicht vorher aufgetragen werden können, da sie nicht mit den Bedingungen des Aushärtens des Betons kompatibel sind.

Die bekannten Verfahren zum Bedrucken von Betonelementen basieren vor allem auf dem sogenannten Trockendruckverfahren. Hierbei wird nach dem Aushärten des Betons das Betonelement mit einem Material bedruckt. So können Muster auf dem Beton aufgetragen werden und auch farbliche Gestaltungen des Betonelements sind auf diese Weise möglich.

Allerdings wäre die Bedruckung von noch nicht ausgehärtetem, nassem Beton von besonderem Interesse, da die Druckzusammensetzungen durch das Zerfließen im Beton Muster und Strukturen ergeben können, die nicht durch das Trockendruckverfahren zu erhalten sind. Hierfür müssten die Druckzusammensetzungen allerdings eine Vielzahl an Bedingungen erfüllen. Sie müssten im richtigen Maße in horizontaler und/oder vertikaler Richtung im Beton zerfließen, um die gewünschten Muster zu ergeben. Gleichzeitig müssten sie eine gute Haftung auf dem ausgehärteten Beton aufweisen und mit den Bedingungen des Aushärtens des Betons kompatibel sein.

In der DE 10 2006 014 900 A1 wird ein Nassdruckverfahren für Betonelemente nach dem Oberbegriff des Anspruchs 1 beschrieben. Das dort beschriebene Betonerzeugnis weist an einer Sichtseite eine in den Beton eingebundene Bedruckung auf. Die Bedruckung wird herstellungstechnisch auf dem nassen Beton, der noch nicht abgebunden hat oder höchstens zu einem Teil abgebunden hat, vorgenommen. Allerdings geht die DE 10 2006 014 900 A1 nicht auf die genaue Druckzusammensetzung ein und beschäftigt sich nicht mit dem Zerfließen der Druckzusammensetzung auf dem nassen Beton. Somit können nicht die gewünschten zerfließenden Muster auf und/oder im Beton erhalten werden. Außerdem geht die Druckschrift nicht auf das Problem der Haftung des Materials am ausgehärteten Beton ein und auf die Eigenschaften, die von der Druckzusammensetzung erfüllt werden müssen, damit die Druckzusammensetzung nicht beim thermischen Aushärten des Betonelements die gewünschte Struktur verliert.

Die vorliegende Erfindung stellt sich somit die Aufgabe, ein Verfahren zur Herstellung eines bedruckten Betonelements bereitzustellen, bei dem ein Betonelement mit einer Druckzusammensetzung noch vor dem Aushärten des Betonelements bedruckt wird, wobei die Druckzusammensetzung in horizontaler und/oder vertikaler Richtung zur Oberfläche im Beton zerfließt, gut am Beton haftet und mit den Bedingungen des Aushärtens, insbesondere des thermischen Aushärtens, des Betons kompatibel ist.

Diese Aufgabe wird durch das in Anspruch 1 beschriebene Verfahren und das in Anspruch 14 beschriebene Erzeugnis erfüllt.

Vorteilhafte Ausgestaltungen der Erfindung sind in den abhängigen Ansprüchen angegeben und werden nachfolgend wie der allgemeine Erfindungsgedanke im Einzelnen erläutert.

Das erfindungsgemäße Verfahren zur Herstellung eines bedruckten Betonelements, insbesondere eines bedruckten Betonsteins, einer bedruckten Betonplatte oder einer bedruckten Betonstufe, umfasst mindestens folgende Schritte:
- Einfüllen von Beton in eine Form unter Ausformung eines Betonelements;
- Bedrucken mindestens eines Oberflächenbereichs des Betonelements mit einer Druckzusammensetzung umfassend ein Bindemittel A und einen Farbstoff B, wobei das Bindemittel A mindestens ein Siloxan und mindestens ein Silan enthält; und
- Aushärten des Betonelements nach dem Bedrucken.

Überraschenderweise hat sich herausgestellt, dass die besonderen Herausforderungen an eine Druckzusammensetzung für das Bedrucken eines noch nicht ausgehärteten Betons von einer Druckzusammensetzung erfüllt werden, die ein Bindemittel A und einen Farbstoff B umfasst, wobei das Bindemittel A ein Siloxan und ein Silan enthält. Wird mindestens ein Oberflächenbereich des Betonelements mit der beschriebenen Druckzusammensetzung bedruckt, so entstehen durch das Zerfließen der Druckzusammensetzung in horizontaler und/oder vertikaler Richtung zur Oberfläche im Beton verschiedene, gestaltende Muster, die auch nach dem anschließenden Aushärten des Betons gut am Beton haften und durch den Prozess des Aushärtens nicht beschädigt werden.

Das Bedrucken eines nassen, noch nicht ausgehärteten Betonelements mit einer Druckzusammensetzung, die ein Bindemittel A und einen Farbstoff B umfasst, wobei das Bindemittel mindestens ein Siloxan und mindestens ein Silan enthält, ermöglicht den Zugang zu neuen Mustern und Strukturen auf und/oder im Beton, die mit den zuvor existierenden Verfahren nicht zugänglich waren. Durch die spezifische Zusammensetzung von Siloxan und Silan im Bindemittel A zerfließt die Druckzusammensetzung im nassen Beton in genau dem richtigen Maß, um interessante Muster zu ergeben. Das Silan geliert beim anschließenden Aushärten des Betons und sorgt für die ausgezeichnete Haftung des Materials am Beton. Im Gegensatz zu anderen getesteten Materialien zeichnet sich das im erfindungsgemäßen Verfahren eingesetzte Bindemittel A durch eine ausgezeichnete Wärmebeständigkeit aus, weshalb das im nassen Betonelement aufgetragene Muster auch einen thermischen Aushärtungsschritt gut übersteht.

Das erfindungsgemäße Verfahren kann somit eine große Anzahl von neuartigen Strukturen und Mustern auf einem Betonelement ermöglichen. Zum Bedrucken des Betonelements mit der Druckzusammensetzung kann eine Vielzahl an unterschiedlichen Druckverfahren verwendet werden. Zu den möglichen Druckverfahren gehören Tintenstrahldruck-, Siebdruck-, Pulverlackierungs-, Laserdruck-, Nadeldruck-, Elektrostatik-, Flüssigdruck- und/oder Tampondruck-Verfahren. Es können auch unterschiedliche Druckverfahren kombiniert werden. Das Tintenstrahldruckverfahren hat sich als besonders bevorzugt herausgestellt, vor allem da es günstig und weit verbreitet ist. Es ist durchaus möglich, auch andere Druckverfahren zum Bedrucken des Betonelements mit der Druckzusammensetzung zu verwenden.

Als besonders bedeutend für das erfindungsgemäße Verfahren hat sich das Bindemittel A herausgestellt. Das Bindemittel A umfasst mindestens zwei Komponenten, wobei eine Komponente ein Siloxan ist und eine andere Komponente ein Silan ist. Bei dem Siloxan handelt es sich vorzugsweise um ein Silikonharz, insbesondere um ein kondensiertes, vorvernetztes Silikonharz. Kondensierte, vorvernetzte Silikonharze besitzen die richtigen Eigenschaften, um der Druckzusammensetzung die nötige Stabilität und Fließbarkeit zu geben. Das Bindemittel A ist vorzugsweise ein organisch-anorganisches Bindemittel.

Das Bindemittel A enthält als eine Komponente vorzugsweise ein kondensiertes, vorvernetztes Silikonharz mit einem anorganischen Anteil vorzugsweise von 50 bis 85% und/oder einer bevorzugten Kondensationsrate von 30 bis 90%, besonders bevorzugt von 70 bis 90%. Das Silikonharz ist vorzugsweise ein Methyl-, Methyl/Phenyl- oder Phenyl-Silikonharz. Es kommen auch Mischungen von unterschiedlichen Silikonharzen, insbesondere Mischungen der zuvor genannten Silikonharze, in Betracht.

Das Bindemittel A enthält als weitere Komponente ein Silan. Das Silan ist vorzugsweise ausgewählt aus Monomeren der Zusammensetzung (R)ₐ-Si-(OR)_{b} mit a = 0, 1 oder 2 und b = 2, 3 oder 4. Hierbei kann R vorzugsweise eine unsubstituierte oder substituierte organische Seitenkette der Zusammensetzung Methyl (Me), Ethyl (Et), Propyl (Pr) und/oder Phenyl (Ph) sein. Besonders bevorzugt wird das Silan ausgewählt aus Me-Si-(OEt)₃, Pr-Si-(OEt)₃, Ph-Si-(OMe)₃, Me₂Si-(OMe)₂ und Si(OEt)₄. Es kommen auch Mischungen von unterschiedlichen Silanen, insbesondere Mischungen der zuvor genannten Silane, in Betracht.

Das erfindungsgemäße Bindemittel A kann sehr breite Mischungsverhältnisse der beiden Komponenten, Siloxan und Silan, aufweisen. Insbesondere kann die Bindemittel A-Mischung vorzugsweise Siloxan und Silan in einem Massenverhältnis von 10:90 bis 90:10, besonders bevorzugt von 50:50 bis 80:20 enthalten. Weiter bevorzugt sind die Massenverhältnisse von Siloxan und Silan im Bindemittel A von etwa 75:25, etwa 70:30, etwa 65:35, etwa 60:40 und etwa 55:45.

Das erfindungsgemäße Bindemittel A kann mit Lösungsmitteln verdünnt werden. Vorzugsweise sind die Lösungsmittel ausgewählt aus einer Gruppe bestehend aus Wasser, Alkoholen, Estern, Siedebenzinen, aromatischen Lösungsmitteln und Mischungen davon. Bevorzugte Verdünnungen des Bindemittels in den Lösungsmitteln haben einen Feststoffwert von 10 bis 100 Gew.%, weiter bevorzugt von 40 bis 80 Gew.%, besonders bevorzugt von 60 bis 80 Gew.%, gemessen nach DIN EN ISO 3251:2008.

Für das erfindungsgemäße Verfahren können unterschiedlichste Farbstoffe als Farbstoff B eingesetzt werden. So kann Farbstoff B vorzugsweise ausgewählt sein aus anorganischen und organischen Farbstoffen und/oder Pigmenten, insbesondere aus Rußen, Eisenoxiden, fluoreszierenden Farbstoffen, IR-absorbierenden Farbstoffen, UV-reflektierenden Farbstoffen, elektrisch leitenden Pigmenten, elektrisch isolierenden Pigmenten und magnetischen Füllstoffen. Besonders bevorzugt ist Farbstoff B ausgewählt aus anorganischen Farbstoffen und/oder Pigmenten wie etwa Eisenoxidpigmenten (rot, gelb, schwarz), Kobaltoxidpigmenten (blau, grün) und/oder Titanoxidpigmenten (weiß).

Eine weitere Besonderheit der im erfindungsgemäßen Verfahren eingesetzten Druckzusammensetzung ist, dass der Einsatz eines Härtungskatalysators optional ist. Andere Druckzusammensetzungen benötigen häufig große Mengen an Härtungskatalysatoren. Da im erfindungsgemäßen Verfahren die Druckzusammensetzung auf den frischen Beton noch vor dem Aushärten aufgetragen wird, kann das im Beton enthaltene alkalische Milieu als Katalysator für die Aushärtung der Druckzusammensetzung dienen. Es kann allerdings Fälle geben, in denen es durchaus sinnvoll ist, wenn die Druckzusammensetzung weiterhin einen Härtungskatalysator C enthält. Der Härtungskatalysator C ist vorzugsweise ausgewählt aus der Gruppe, bestehend aus Phosphorsäure, Phosphorsäureester, Phosphorsäurediester, Phosphonsäure, Phosphonsäureester, Phosphonsäurediester, Metallalkoxiden einschließlich Aluminium-, Titan- und Zirkonalkoxiden, Aminen und Aminosilanen. Der Härtungskatalysator C kann in vergleichsweise geringen Mengen eingesetzt werden, vorzugsweise in einer Menge von 0,5 bis 20 Gew.%, besonders bevorzugt in einer Menge von 2,5 bis 10 Gew.%, bezogen auf das Gesamtgewicht der Druckzusammensetzung.

Das erfindungsgemäße Verfahren kann neben den bereits beschriebenen Verfahrensschritten noch weitere Verfahrensschritte umfassen. Vorzugsweise wird der Beton nach dem Einfüllen in die Form verdichtet, insbesondere mittels Vibration und/oder mittels eines Stempels. Besonders vorteilhaft ist es, wenn der Beton vor dem Bedrucken verdichtet wird. Das Verdichten sorgt für eine gleichmäßige Oberfläche des Betons und hilft dabei, Luft aus dem Beton auszutreiben.

Gemäß einer Ausführungsform wird der Beton vor dem Bedrucken aus der Form entnommen. Dieser Verfahrensschritt wird gemeinhin als "Entschalung" bezeichnet. Der Beton kann gemäß einer alternativen Ausführungsform auch nach dem Bedrucken aus der Form entnommen werden. Die Entschalung findet besonders bevorzugt nach dem Verdichten des Betons statt. Somit ist eine besonders bevorzugte Verfahrensabfolge:
- Einfüllen des Betons in eine Form unter Ausformung eines Betonelements;
- Verdichten des Betons;
- Entschalung des Betonelements;
- Bedrucken mindestens eines Oberflächenbereichs des Betonelements;
- Aushärten des Betonelements nach dem Bedrucken.

Bei einem weiteren, bevorzugten Verfahrensschritt wird der Beton einer strukturverleihenden Oberflächenbehandlung, vorzugsweise durch Bürsten oder Prägen, unterzogen. Als eine solche strukturverleihende Oberflächenbehandlung kommt in bevorzugter Weise das Verfahren zur Behandlung von Oberflächen aus der DE 100 54 581 A1 in Betracht. Die strukturverleihende Oberflächenbehandlung findet vorzugsweise nach dem Bedrucken des Betonelements statt. Weiter bevorzugt findet die strukturverleihende Oberflächenbehandlung vor dem Aushärten des Betons statt. Besonders bevorzugt findet die strukturverleihende Oberflächenbehandlung nach dem Bedrucken und vor dem Aushärten des Betons statt. Durch diese Reihenfolge der Verfahrensschritte lassen sich synergistische Gestaltungseffekte zwischen dem Bedrucken und der strukturverleihenden Oberflächenbehandlung erreichen, da die strukturverleihende Oberflächenbehandlung einen Einfluss auf die bereits bedruckten Muster haben kann und sich somit weitere Muster und Gestaltungen des Betonelements eröffnen.

Bei dem in die Form einzufüllenden Beton kann es sich um beliebige Betonarten handeln. Nach einer bevorzugten Ausführungsform des erfindungsgemäßen Verfahrens wird in die Form ein Kernbeton (Rohbeton) eingefüllt. In einer weiteren bevorzugten Ausführungsform wird in die Form ein Vorsatzbeton eingefüllt. Besonders bevorzugt werden in die Form ein Kernbeton und ein Vorsatzbeton eingefüllt. Wenn sowohl ein Kernbeton als auch ein Vorsatzbeton in die Form eingefüllt wird, besteht eine bevorzugte Reihenfolge des Einfüllens darin, zuerst den Kernbeton in die Form einzufüllen und anschließend den Vorsatzbeton in die Form einzufüllen. Dadurch liegt der Vorsatzbeton auf dem günstigeren Kernbeton und stellt die sichtbare Oberfläche des Betonelements dar. Die Reihenfolge kann allerdings auch umgedreht werden, beispielsweise wenn das Betonelement noch vor dem Bedrucken umgedreht wird. Vorzugsweise findet die erfindungsgemäße Bedruckung des Betons auf dem Vorsatzbeton statt. Dadurch lassen sich besonders schöne Betonelemente erhalten. Wenn sowohl ein Kernbeton als auch ein Vorsatzbeton in die Form eingefüllt wird, können die Mengenverhältnisse zwischen Kern- und Vorsatzbeton aus einem breiten Bereich ausgewählt sein. Es ist bevorzugt, wenn mehr Kernbeton als Vorsatzbeton verwendet wird, da dadurch ein ökonomischeres Verfahren möglich ist.

Von besonderer Bedeutung für das erfindungsgemäße Verfahren ist die Zusammensetzung des zu bedruckenden Betons. Besonders gute Ergebnisse können erzielt werden, wenn der zu bedruckende Beton zum Zeitpunkt des Bedruckens einen Wasser-Bindemittel-Wert (w/b-Wert) von 0,30 bis 0,50 aufweist. Experimentelle Studien haben gezeigt, dass besonders ein Beton mit einem w/b-Wert von 0,31 bis 0,45, vorzugsweise 0,35 bis 0,40, sehr gute Druckergebnisse ermöglicht. Insbesondere wurde festgestellt, dass mit der erfindungsgemäß eingesetzten Druckzusammensetzung eine besonders gute Haftfestigkeit einerseits sowie homogene Zerfließeigenschaften andererseits erzielt werden können, wenn ein Beton verwendet wird, der zum Zeitpunkt des Bedruckens die genannten w/b-Werte aufweist.

Es hat sich ferner gezeigt, dass mit dem erfindungsgemäßen Verfahren ein besonders gutes Druckbild erzeugt werden kann, wenn ein Beton verwendet wird, dessen Bindemittelanteil in einem bestimmten Zahlenbereich liegt. Der Bindemittelanteil des zu bedruckenden Betons beträgt nach einer bevorzugten Ausführungsform der Erfindung von 10 bis 35 Gew.%, weiter bevorzugt 17,5 bis 20,5 Gew.%, bezogen auf die Gesamtzusammensetzung des Betons. Diese Bereiche gelten insbesondere, wenn Zement als Bindemittel eingesetzt wird. Wird Geopolymer als Bindemittel eingesetzt, beträgt der Bindemittelanteil des zu bedruckenden Betons vorzugsweise 25 bis 30 Gew.% (Feststoffkomponente) und 2,5 Gew.% bis 6 Gew.% Aktivatorflüssigkeit (bevorzugt etwa 4,5 Gew.%), bezogen auf die Gesamtzusammensetzung des Betons.

Vorzugsweise enthält der zu bedruckende Beton ein anorganisches Bindemittel. Besonders bevorzugte anorganische Bindemittel sind ausgewählt aus der Gruppe bestehend aus Zement, Alkalisilikat-basierte Bindemittel (Geopolymere), hydraulischer Kalk, Gips und Mischungen davon.

Der zu bedruckende Beton enthält vorzugsweise einen Vorsatzbeton auf Basis von Zement, (Brech)Sand-Kies-Splitt-Gemisch und Wasser. Dieser Vorsatzbeton zeichnet sich durch gute mechanischen Eigenschaften und ein ansprechendes Erscheinungsbild aus. Nach einer bevorzugten Ausführungsform der Erfindung enthält der Vorsatzbeton außerdem Farbpigmente, Zusatzmittel und/oder Zusatzstoffe zur Verbesserung der Verarbeitungs- oder Produkteigenschaften. Die Auswahl der Zusatzstoffe hängt unter anderem von anderen Parametern des Verfahrens sowie von der gewünschten Verwendung des Betonelements ab. Durch die besondere Zusammensetzung des Vorsatzbetons und die optionalen Farbpigmente, Zusatzmittel und/oder Zusatzstoffe zur Verbesserung der Verarbeitungs- oder Produkteigenschaften können besonders viele unterschiedlich bedruckte und gestaltete Betonelemente gemäß dem erfindungsgemäßen Verfahren erhalten werden.

Zum weiteren Schutz der Oberfläche des Betonelements kann gemäß einer bevorzugten Ausführungsform nach dem Bedrucken des Betonelements mindestens eine Deckschicht D auf den bedruckten Oberflächenbereich des Betonelements gebracht werden. Die Deckschicht D kann vor und/oder nach dem Aushärten des Betons aufgebracht werden. Je nachdem, ob die Deckschicht vor oder nach dem Aushärten des Betons aufgebracht wird, kann diese in ihrer Zusammensetzung variieren. Als Deckschicht, die vor dem Aushärten des Betons aufgebracht wird, kann beispielsweise eine thermisch aushärtende Deckschicht verwendet werden. Als Deckschicht, die nach dem Aushärten des Betons aufgebracht wird, kommt hingegen, wie weiter unten näher ausgeführt, beispielsweise eine UV-härtende Deckschicht in Betracht.

Nach einer bevorzugten Ausführungsform der Erfindung ist die Deckschicht D eine Deckschicht auf Basis eines wasserbasierenden Lackes, insbesondere eines wasserbasierenden Acrylat- und/oder Polyurethan- und/oder Epoxidharzes. Die wasserbasierten Acrylat- und/oder Polyurethan- und/oder Epoxidharze eignen sich für das Aufbringen auf das bedruckte Betonelement vor und/oder nach dem Aushärten des Betons, besonders aber eignen sie sich für das Aufbringen auf das bedruckte Betonelement nach dem Aushärten des Betons. Die wasserbasierten Acrylat- und/oder Polyurethan- und/oder Epoxidharze zeigen besonders gute Schutz- und Deckeigenschaften, wenn sie einen Feststoffgehalt von 20 bis 45 Gew.% aufweisen.

Gemäß einer anderen bevorzugten Ausführungsform der Erfindung ist die Deckschicht D eine Deckschicht auf Basis eines Sol-Gel-Lacks, vorzugsweise eines Sol-Gel-Lacks auf Silikonharz/Silan-Basis. Der Sol-Gel-Lack weist vorzugsweise einen relativ hohen Feststoffgehalt von 60 bis 100 Gew.% auf. Besonders bevorzugt weist der Sol-Gel-Lack einen Feststoffgehalt von mindestens 80 Gew.% auf (*high-solid* Lack). Der Feststoffgehalt des Sol-Gel-Lacks wird vorzugsweise nach DIN EN ISO 3251:2008 bestimmt. In einer weiteren bevorzugten Ausführungsform der Erfindung ist der Sol-Gel-Lack der optionalen Deckschicht D eine wässrige Emulsion. Eine Deckschicht auf Basis eines Sol-Gel-Lackes eignet sich für das Aufbringen auf das bedruckte Betonelement vor und/oder nach dem Aushärten des Betons, besonders aber eignen sie sich für das Aufbringen auf das bedruckte Betonelement vor dem Aushärten des Betons. Wird eine Deckschicht auf Basis eines Sol-Gel-Lacks vor dem Aushärten des Betons auf das bedruckte Betonelement aufgebracht, so kann der Sol-Gel-Lack beim Aushärten des Betons auch selbst aushärten. Auf diese Weise ist kein weiterer Aushärtungsschritt nötig. Nach einer alternativen Ausführungsform der Erfindung eignet sich eine Deckschicht D, insbesondere eine Deckschicht D auf Basis eines Sol-Gel-Lacks, auch als Primer (Haftvermittler) vor dem Bedrucken des Betons. Zu diesem Zweck kann die Deckschicht D vor dem Bedrucken auf die Oberfläche des noch nicht ausgehärteten Betons aufgebracht werden. Durch das optionale Aufbringen einer Deckschicht D als Primer vor dem Bedrucken kann die Haftung der Druckzusammensetzung an dem Beton weiter verbessert werden.

Die optionale Deckschicht D ist nach einer bevorzugten Ausführungsform eine Deckschicht auf Basis eines unter Einwirkung von Wärme und/oder elektromagnetischer Strahlung, insbesondere UV-Strahlung, selbstständig aushärtenden Lackes. Wird die Deckschicht D nach dem Bedrucken und vor dem Aushärten auf den bedruckten Oberflächenbereich des Betonelements aufgetragen, so handelt es sich nach einer bevorzugten Ausführungsform der Erfindung um eine Deckschicht D auf Basis eines thermisch aushärtenden Lackes. Dadurch kann der Lack beim Aushärten des Betons mitaushärten. Wird die Deckschicht D nach dem Aushärten auf den bedruckten Oberflächenbereich des Betonelements aufgetragen, so handelt es sich nach einer bevorzugten Ausführungsform der Erfindung um eine Deckschicht D auf Basis eines unter Einwirkung von elektromagnetischer Strahlung, insbesondere UV-Strahlung, aushärtenden Lackes. Bei dem Lack kann es sich beispielsweise um einen wasserbasierten oder nicht-wasserbasierten Lack, insbesondere UV-Lack, handeln. Wird ein nicht-wasserbasierter Lack eingesetzt, weist dieser vorzugsweise einen Feststoffgehalt von 100 Gew.% auf. Vorzugsweise wird ein sogenannter "100% UV-Lack ohne Lösungsmittel" eingesetzt. Mit dieser Verfahrensweise kann eine Deckschicht D auf das ausgehärtete Betonelement auf den bedruckten Oberflächenbereich aufgetragen und in einem separaten Schritt durch den Einfluss von elektromagnetischer Strahlung, insbesondere UV-Strahlung, ausgehärtet werden.

Die optionale Deckschicht D kann auf unterschiedliche Weise auf den bedruckten Oberflächenbereich des Betonelements aufgetragen werden. Bevorzugte Verfahren zum Auftragen der Deckschicht sind das Sprüh-, Walz-, oder Vorhanggießverfahren.

Die Erfindung stellt ferner ein Betonelement, insbesondere einen Betonstein, eine Betonplatte oder eine Betonstufe bereit, welches an mindestens einer Sichtseite eine in den Beton eingebundene Bedruckung aufweist, wobei die Bedruckung mit einer Druckzusammensetzung erzeugt worden ist, die ein Bindemittel A und einen Farbstoff B umfasst und wobei das Bindemittel A ein Siloxan und ein Silan enthält. Das Bindemittel A und/oder der Farbstoff B des erfindungsgemäßen Betonelements sind bevorzugt wie in einem der vorherigen Absätze definiert. Nach einer bevorzugten Ausführungsform der Erfindung weist die bedruckte Sichtseite des Betonelements mindestens eine Deckschicht D auf. Die mindestens eine Deckschicht D des erfindungsgemäßen Betonelements ist vorzugsweise wie in einem der vorherigen Absätze definiert.

Die Erfindung wird nachfolgend anhand eines Ausführungsbeispiels näher erläutert, das allein dem Verständnis der Erfindung dient und diese nicht beschränken soll.

### Beispiel

Ein Rohbeton wurde in eine Form für einen Pflasterstein eingefüllt. Anschließend wurde ein Vorsatzbeton bestehend aus Zement, einem (Brech)Sand-Kies-Splitt-Gemisch und Wasser mit einem Wasser-Bindemittel-Wert (w/b-Wert) von 0,35, einem Größtkorn von 4 mm und einem Zementanteil in der Vorsatzbetonschicht von 19 Gew.%, bezogen auf die Gesamtzusammensetzung der Vorsatzbetonschicht, auf den Kernbeton und in die Form eingefüllt. Mit einem Rüttelstampfverfahren wurde anschließend der Beton zu einem Pflasterstein verdichtet und das Betonelement wurde direkt im Anschluss von der Form entschalt. Direkt nach der Entschalung wurde der feuchte Beton mit einem Tintenstrahldrucker mit einer Tinte bedruckt. Die Tinte wurde wie folgt hergestellt:
30 g Silres MSE100 (Silikonharz; WACKER CHEMIE AG) und 30 g Dynasil A (Tetraethylorthosilicat; EVONIK INDUSTRIES AG) wurden vermischt und für 10 Minuten bei Raumtemperatur gerührt. Anschließend wurden 18 g Bayferrox 306 schwarz (Farbstoff; LANXESS AG), 3 g Silbond 6000 EST (SiOz Pulver; QUARZWERKE GmbH), 2,5 g 3-Aminopropyltriethoxysilan, 0,18 g Tego Glide 410 (Additiv; TEGO/EVONIK INDUSTRIES AG) und 3 g Hordaphos MDAH (Phosphorsäureester; CLARIANT AG) zur Mischung unter Rühren hinzugegeben und die gesamte Mischung wurde für 24 Stunden bei Raumtemperatur gerührt. Die erhaltene Tinte konnte direkt im Anschluss eingesetzt werden.

Durch das Bedrucken des feuchten Betons mit der Tinte entstand ein Druckbild. Anschließend wurde das Druckbild mit einem Klarlack auf Basis einer Sol-Gel-Mischung versehen. Das Betonelement wurde bei einer Temperatur von 25 bis 30 °C für eine Dauer von 12 Stunden ausgehärtet. Abschließend wurde eine weitere Klarlackschicht auf Basis eines wässrigen Acrylat/Polyurethan-Gemisches auf das ausgehärtete Betonelement aufgetragen und unter einer UV-Lampe ausgehärtet. Der auf diese Weise erhaltene Pflasterstein hatte eine Spaltzugfestigkeit bestimmt nach DIN EN 1338 von > 2,6 MPa und im Falle einer Platte eine Biegezugfestigkeit von > 4,0 MPa sowie einen Abriebwiderstand gemäß DIN EN 1338, Anhang H von < 18000 cm³/5000mm² auf. Weiterhin hatte die ausgehärtete Betonschicht des Pflastersteins eine Dichte gemäß DIN EN 13369 von > 2,25 kg / m³. Das Druckbild auf dem Betonelement war nach dem Aushärten des Betons und Lacks komplett erhalten geblieben.

## Patentansprüche

1. Verfahren zur Herstellung eines bedruckten Betonelements, insbesondere eines bedruckten Betonsteins, einer bedruckten Betonplatte oder einer bedruckten Betonstufe, umfassend mindestens folgende Schritte:
- Einfüllen von Beton in eine Form unter Ausformung eines Betonelements;
- Bedrucken mindestens eines Oberflächenbereichs des Betonelements mit einer Druckzusammensetzung; und
- Aushärten des Betonelements nach dem Bedrucken, **dadurch gekennzeichnet, dass** die Druckzusammensetzung ein Bindemittel A und einen Farbstoff B umfasst, wobei das Bindemittel A mindestens ein Siloxan und mindestens ein Silan enthält.

2. Verfahren nach Anspruch 1, **dadurch gekennzeichnet, dass** das Siloxan ein Silikonharz ist und/oder das Bedrucken unter Einsatz eines Tintenstrahl-, Siebdruck-, Pulverlackierungs-, Laserdruck-, Nadeldruck-, Elektrostatik-, Flüssigdruck- und/oder Tampondruck-Verfahrens erfolgt.

3. Verfahren nach einem der vorstehenden Ansprüche, **dadurch gekennzeichnet, dass** das organisch-anorganische Bindemittel A ein kondensiertes vorvernetztes Silikonharz mit einem anorganischen Anteil von 50 bis 85% und/oder einer Kondensationsrate von 30 bis 90%, insbesondere 70 bis 90%, enthält und/oder das Bindemittel A ein Silan enthält, welches ausgewählt ist aus Monomeren der Zusammensetzung (R)ₐ-Si-(OR)_{b} mit a = 0, 1 oder 2 und b= 2, 3 oder 4, wobei R eine unsubstituierte oder substituierte organische Seitenkette der Zusammensetzung Methyl (Me), Ethyl (Et), Propyl (Pr) oder Phenyl (Ph) ist und/oder das Bindemittel A ein Silan enthält, welches ausgewählt ist aus Me-Si-(OEt)₃, Pr-Si-(OEt)₃, Ph-Si-(OMe)₃, Me₂Si-(OMe)₂ und Si(OEt)₄ und/oder das Bindemittel A Silikonharz und Silan in einem Massenverhältnis von 10:90 bis 90:10, insbesondere von 50:50 bis 80:20, enthält.

4. Verfahren nach einem der vorstehenden Ansprüche, **dadurch gekennzeichnet, dass** der Farbstoff B ausgewählt ist aus anorganischen und organischen Farbstoffen bzw. Pigmenten, insbesondere aus Rußen, Eisenoxiden, fluoreszierenden Farbstoffen, IR-absorbierenden Farbstoffen, UV-reflektierenden Farbstoffen, elektrisch leitenden Pigmenten, elektrisch isolierenden Pigmenten und magnetischen Füllstoffen, wobei der Farbstoff B vorzugsweise ausgewählt ist aus anorganischen Farbstoffen bzw. anorganischen Pigmenten.

5. Verfahren nach einem der vorstehenden Ansprüche, **dadurch gekennzeichnet, dass** die Druckzusammensetzung weiterhin einen Härtungskatalysator C enthält, wobei der Härtungskatalysator C vorzugsweise ausgewählt ist aus der Gruppe bestehend aus Phosphorsäure, Phosphorsäureester, Phosphorsäurediester, Phosphonsäure, Phosphonsäureester, Phosphonsäurediester, Metallalkoxiden einschließlich Aluminium-, Titan- und Zirkonalkoxiden, Aminen und Aminosilanen und/oder wobei der Härtungskatalysator C vorzugsweise in der Druckzusammensetzung in einer Menge von 0,5 bis 20 Gew.%, insbesondere 2,5 bis 10 Gew.%, bezogen auf das Gesamtgewicht der Druckzusammensetzung, enthalten ist.

6. Verfahren nach einem der vorstehenden Ansprüche, **dadurch gekennzeichnet, dass** der Beton nach dem Einfüllen in die Form verdichtet wird, insbesondere mittels Vibration und/oder mittels eines Stempels und/oder der Beton vor dem Bedrucken verdichtet wird.

7. Verfahren nach einem der vorstehenden Ansprüche, **dadurch gekennzeichnet, dass** der Beton vor dem Bedrucken aus der Form entnommen wird, wobei die Entschalung vorzugsweise nach dem Verdichten des Betons erfolgt.

8. Verfahren nach einem der vorstehenden Ansprüche, **dadurch gekennzeichnet, dass** der Beton einer strukturverleihenden Oberflächenbehandlung, insbesondere durch Bürsten oder Prägen, unterzogen wird, wobei die strukturverleihende Oberflächenbehandlung vorzugsweise nach dem Bedrucken und/oder vor dem Aushärten des Betons erfolgt und/oder in die Form ein Kern- und/oder Vorsatzbeton eingefüllt wird, wobei die Bedruckung vorzugsweise auf dem Vorsatzbeton erfolgt.

9. Verfahren nach einem der vorstehenden Ansprüche, **dadurch gekennzeichnet, dass** der zu bedruckende Beton zum Zeitpunkt des Bedruckens einen Wasser-Bindemittel-Wert (w/b-Wert) von 0,30 bis 0,50, insbesondere einen w/b-Wert von 0,31 bis 0,45 oder 0,35 bis 0,40, aufweist und/oder der zu bedruckende Beton einen Bindemittelanteil von 10 bis 35 Gew.%, insbesondere 17,5 bis 20,5 Gew.% oder 25 bis 30 Gew.%, bezogen auf die Gesamtzusammensetzung des Betons, aufweist.

10. Verfahren nach einem der vorstehenden Ansprüche, **dadurch gekennzeichnet, dass** der zu bedruckende Beton ein anorganisches Bindemittel wie Zement, Alkalisilikat-basiertes Bindemittel (Geopolymer), hydraulischer Kalk und/oder Gips enthält und/oder der zu bedruckende Beton ein Vorsatzbeton auf Basis von Zement, (Brech)Sand-Kies-Splitt-Gemisch und Wasser ist, welcher optional Farbpigmente, Zusatzmittel und/oder Zusatzstoffe zur Verbesserung der Verarbeitungs- oder Produkteigenschaften enthält.

11. Verfahren nach einem der vorstehenden Ansprüche, **dadurch gekennzeichnet, dass** nach dem Bedrucken des Betonelements mindestens eine Deckschicht D auf den bedruckten Oberflächenbereich des Betonelements aufgebracht wird, wobei die optionale Deckschicht D vorzugsweise vor und/oder nach dem Aushärten des Betons aufgebracht wird und/oder wobei die optionale Deckschicht D eine Deckschicht auf Basis eines wasserbasierenden Lackes, insbesondere eines wasserbasierenden Acrylat-, Polyurethan-, und/oder Epoxidharzes ist, wobei der wasserbasierende Lack vorzugsweise einen Feststoffgehalt von 20 bis 45 Gew.% aufweist.

12. Verfahren nach Anspruch 11, **dadurch gekennzeichnet, dass** die optionale Deckschicht D eine Deckschicht auf Basis eines Sol-Gel-Lacks, insbesondere eines Sol-Gel-Lacks auf Silikonharz/Silan-Basis, ist, wobei der Sol-Gel-Lack vorzugsweise einen Feststoffgehalt von 60 bis 100 Gew.% aufweist und/oder wobei die optionale Deckschicht D eine Deckschicht auf Basis eines unter Einwirkung von Wärme und/oder elektromagnetischer Strahlung, insbesondere UV-Strahlung, selbstständig aushärtenden Lackes ist und/oder wobei die optionale Deckschicht D mittels Sprüh-, Walz- oder Vorhanggießverfahren auf einen Oberflächenbereich des Betonelements aufgetragen wird.

13. Verfahren nach einem der vorstehenden Ansprüche, **dadurch gekennzeichnet, dass** nach dem Bedrucken und vor dem Aushärten eine Deckschicht D auf Basis eines thermisch aushärtenden Lackes auf den bedruckten Oberflächenbereich des Betonelements aufgetragen wird und/oder nach dem Aushärten eine Deckschicht D auf Basis eines unter Einwirkung von elektromagnetischer Strahlung, insbesondere UV-Strahlung, aushärtenden Lackes auf den bedruckten Oberflächenbereich des Betonelements aufgetragen wird.

14. Betonelement, insbesondere Betonstein, Betonplatte oder Betonstufe, welches an mindestens einer Sichtseite eine in den Beton eingebundene Bedruckung aufweist, **dadurch gekennzeichnet, dass** die Bedruckung mit einer Druckzusammensetzung erzeugt worden ist, die ein Bindemittel A und einen Farbstoff B umfasst und wobei das Bindemittel A ein Siloxan und ein Silan enthält.

15. Betonelement gemäß Anspruch 14, **dadurch gekennzeichnet, dass** das Bindemittel A und/oder der Farbstoff B wie in einem der Ansprüche 1 bis 4 definiert ist und/oder die bedruckte Sichtseite des Betonelements mindestens eine Deckschicht D aufweist, wobei die Deckschicht D vorzugsweise wie in einem der Ansprüche 11 bis 13 definiert ist.

## Claims

1. Method for producing a printed concrete element, in particular a printed concrete block, a printed concrete slab or a printed concrete step, comprising at least the following steps:
- filling concrete into a mold to form a concrete element;
- printing at least one surface region of the concrete element using a printing composition; and
- curing the concrete element after printing, **characterized in that** the printing composition comprises a binder A and a dye B, the binder A containing at least one siloxane and at least one silane.

2. Method according to claim 1, **characterized in that** the siloxane is a silicone resin and/or the printing is carried out using an inkjet, screen printing, powder coating, laser printing, dot matrix printing, electrostatic printing, liquid printing and/or pad printing process.

3. Method according to any of the preceding claims, **characterized in that** the organic-inorganic binder A contains a condensed pre-crosslinked silicone resin having an inorganic fraction of 50 to 85% and/or a condensation rate of 30 to 90%, in particular 70 to 90%, and/or the binder A contains a silane selected from monomers of the composition (R)ₐ-Si-(OR)_{b}, where a = 0, 1 or 2 and b= 2, 3 or 4, where R is an unsubstituted or substituted organic side chain of the composition methyl (Me), ethyl (Et), propyl (Pr) or phenyl (Ph), and/or the binder A contains a silane selected from Me-Si-(OEt)₃, Pr-Si-(OEt)₃, Ph-Si-(OMe)₃, Me₂Si-(OMe)₂ and Si(OEt)₄ and/or the binder A contains silicone resin and silane in a mass ratio of 10:90 to 90:10, in particular of 50:50 to 80:20.

4. Method according to any of the preceding claims, **characterized in that** the dye B is selected from inorganic and organic dyes or pigments, in particular from carbon blacks, iron oxides, fluorescent dyes, IR-absorbing dyes, UV-reflecting dyes, electrically conductive pigments, electrically insulating pigments and magnetic fillers, the dye B preferably being selected from inorganic dyes or inorganic pigments.

5. Method according to any of the preceding claims, **characterized in that** the printing composition further contains a curing catalyst C, the curing catalyst C preferably being selected from the group consisting of phosphoric acid, phosphoric acid esters, phosphoric diesters, phosphonic acid, phosphonic acid esters, phosphonic diesters, metal alkoxides including aluminum, titanium and zirconium alkoxides, amines and aminosilanes, and/or the curing catalyst C preferably being contained in the printing composition in an amount of 0.5 to 20 wt.%, in particular 2.5 to 10 wt.%, based on the total weight of the printing composition.

6. Method according to any of the preceding claims, **characterized in that** the concrete is compacted after being filled into the mold, in particular by means of vibration and/or by means of a tamper, and/or the concrete is compacted prior to printing.

7. Method according to any of the preceding claims, **characterized in that** the concrete is removed from the mold before the printing, the demolding preferably being carried out after the concrete has been compacted.

8. Method according to any of the preceding claims, **characterized in that** the concrete is subjected to a structure-imparting surface treatment, in particular by brushing or embossing, the structure-imparting surface treatment preferably being carried out after the printing and/or before the curing of the concrete, and/or core concrete and/or face concrete is filled into the mold, the printing preferably being carried out on the face concrete.

9. Method according to any of the preceding claims, **characterized in that** the concrete to be printed has a water-binder ratio (w/b ratio) of 0.30 to 0.50, in particular a w/b ratio of 0.31 to 0.45 or 0.35 to 0.40 at the time of printing, and/or the concrete to be printed has a binder content of 10 to 35 wt.%, in particular 17.5 to 20.5 wt.% or 25 to 30 wt.%, based on the total composition of the concrete.

10. Method according to any of the preceding claims, **characterized in that** the concrete to be printed contains an inorganic binder such as cement, alkali silicate-based binders (geopolymers), hydraulic lime and/or gypsum, and/or the concrete to be printed is a face concrete based on cement, a (crushed) sand-gravel-grit mixture and water, which optionally contains color pigments, admixtures and/or additives for improving the processing or product properties.

11. Method according to any of the preceding claims, **characterized in that** at least one cover layer D is applied to the printed surface region of the concrete element after the concrete element has been printed, the optional cover layer D preferably being applied before and/or after the curing of the concrete and/or the optional cover layer D being a cover layer based on a water-based coating, in particular a water-based acrylate, polyurethane, and/or epoxy resin, the water-based coating preferably having a solids content of 20 to 45 wt.%.

12. Method according to claim 11, **characterized in that** the optional cover layer D is a cover layer based on a sol-gel coating, in particular a silicone resin/silane-based sol-gel coating, the sol-gel coating preferably having a solids content of 60 to 100 wt.% and/or the optional cover layer D being a cover layer based on a coating which is self-curing under the action of heat and/or electromagnetic radiation, in particular UV radiation, and/or the optional cover layer D being applied to a surface region of the concrete element by means of spraying, rolling or curtain coating methods.

13. Method according to any of the preceding claims, **characterized in that** after the printing and before the curing, a cover layer D based on a thermally curing coating is applied to the printed surface region of the concrete element, and/or after the curing, a cover layer D based on a coating which cures under the action of electromagnetic radiation, in particular UV radiation, is applied to the printed surface region of the concrete element.

14. Concrete element, in particular a concrete block, concrete slab or concrete step, which has printing integrated into the concrete on at least one visible side, **characterized in that** the printing has been produced using a printing composition comprising a binder A and a dye B, the binder A containing a siloxane and a silane.

15. Concrete element according to claim 14, **characterized in that** the binder A and/or the dye B is as defined in any of claims 1 to 4 and/or the printed visible side of the concrete element has at least one cover layer D, the cover layer D preferably being as defined in any of claims 11 to 13.

## Revendications

1. Procédé de fabrication d'un élément en béton imprimé, en particulier d'un bloc de béton imprimé, d'une dalle de béton imprimée ou d'une marche en béton imprimée, comprenant au moins les étapes suivantes:
- remplissage d'un moule avec du béton, formant ainsi un élément en béton ;
- impression d'au moins une zone de surface de l'élément en béton au moyen d'une composition d'impression ; et
- durcissement de l'élément en béton après l'impression,
**caractérisé en ce que** la composition d'impression comprend un liant A et un colorant B, le liant A contenant au moins un siloxane et au moins un silane.

2. Procédé selon la revendication 1, **caractérisé en ce que** le siloxane est une résine de silicone et/ou l'impression est effectuée au moyen d'un procédé à jet d'encre, un procédé d'impression sérigraphique, un procédé de revêtement en poudre, un procédé d'impression laser, un procédé d'impression à aiguilles, un procédé électrostatique, un procédé d'impression liquide et/ou un procédé d'impression au tampon.

3. Procédé selon l'une des revendications précédentes, **caractérisé en ce que** le liant A organo-inorganique contient une résine de silicone condensée et préréticulée présentant une proportion inorganique de 50 à 85 % et/ou un taux de condensation de 30 à 90 %, en particulier de 70 à 90 %, et/ou le liant A contient un silane choisi parmi les monomères de la composition (R)ₐ-Si-(OR)_{b} avec a = 0, 1 ou 2 et b= 2, 3 ou 4, où R est une chaîne latérale organique non substituée ou substituée de la composition méthyle (Me), éthyle (Et), propyle (Pr) ou phényle (Ph) et/ou le liant A contient un silane choisi parmi Me-Si-(OEt)₃, Pr-Si-(OEt)₃, Ph-Si-(OMe)₃, Me₂Si-(OMe)₂ et Si(OEt)₄ et/ou le liant A contient une résine de silicone et un silane selon un rapport de masse de 10:90 à 90:10, en particulier de 50:50 à 80:20.

4. Procédé selon l'une des revendications précédentes, **caractérisé en ce que** le colorant B est choisi parmi des colorants ou des pigments inorganiques et organiques, en particulier parmi des noirs de carbone, des oxydes de fer, des colorants fluorescents, des colorants absorbant le rayonnement infrarouge, des colorants réfléchissant des rayons UV, des pigments électroconducteurs, des pigments électriquement isolants et des charges magnétiques, le colorant B étant de préférence choisi parmi des colorants inorganiques ou des pigments inorganiques.

5. Procédé selon l'une des revendications précédentes,
**caractérisé en ce que** la composition d'impression contient en outre un catalyseur de durcissement C, dans lequel le catalyseur de durcissement C est de préférence choisi dans le groupe constitué par l'acide phosphorique, l'ester d'acide phosphorique, le diester d'acide phosphorique, l'acide phosphonique, l'ester d'acide phosphonique, le diester d'acide phosphonique, les alcoxydes de métaux, dont les alcoxydes d'aluminium, de titane et de zirconium, des amines et des aminosilanes et/ou dans lequel le catalyseur de durcissement C est de préférence présent dans la composition d'impression en une quantité de 0,5 à 20 % en poids, en particulier 2,5 à 10 % en poids, par rapport au poids total de la composition d'impression.

6. Procédé selon l'une des revendications précédentes, **caractérisé en ce que** le béton est compacté après avoir été mis en moule, en particulier par vibration et/ou à l'aide d'un tampon et/ou le béton est compacté avant l'impression.

7. Procédé selon l'une des revendications précédentes,
**caractérisé en ce que** le béton est retiré du moule avant l'impression, le démoulage ayant lieu de préférence après le compactage du béton.

8. Procédé selon l'une des revendications précédentes, **caractérisé en ce que** le béton est soumis à un traitement de surface conférant une structure, en particulier par brossage ou estampage, dans lequel le traitement de surface conférant une structure est effectué de préférence après l'impression et/ou avant le durcissement du béton, et/ou un béton à forte granulométrie et/ou de parement est versé dans le moule, dans lequel l'impression est de préférence réalisée sur le béton de parement.

9. Procédé selon l'une des revendications précédentes,
**caractérisé en ce que,** au moment de l'impression, le béton à imprimer présente une valeur eau-liant (valeur w/b) de 0,30 à 0,50, en particulier une valeur w/b de 0,31 à 0,45 ou de 0,35 à 0,40, et/ou le béton à imprimer contient une proportion de liant de 10 à 35 % en poids, en particulier de 17,5 à 20,5 % en poids ou de 25 à 30 % en poids, par rapport à la composition totale du béton.

10. Procédé selon l'une des revendications précédentes, **caractérisé en ce que** le béton à imprimer contient un liant inorganique comme du ciment, un liant à base de silicate alcalin (géopolymère), de la chaux hydraulique et/ou du plâtre et/ou le béton à imprimer est un béton de parement à base de ciment, un mélange de sable (de concassage), de gravier et de gravier concassé et de l'eau, lequel mélange contient éventuellement des pigments colorés, des additifs et/ou des adjuvants permettant d'améliorer les propriétés de traitement ou du produit.

11. Procédé selon l'une des revendications précédentes, **caractérisé en ce que,** après l'impression de l'élément en béton, au moins une couche de couverture D est appliquée sur la zone de surface imprimée de l'élément en béton, dans lequel la couche de couverture D facultative est de préférence appliquée avant et/ou après le durcissement du béton et/ou dans lequel la couche de couverture D facultative est une couche de couverture à base d'une laque à base d'eau, en particulier d'une résine acrylique à base d'eau, d'une résine polyuréthane à base d'eau et/ou d'une résine époxy à base d'eau, la laque à base d'eau présentant de préférence une teneur en matières solides de 20 à 45 % en poids.

12. Procédé selon la revendication 11, **caractérisé en ce que** la couche de couverture D facultative est une couche de couverture à base d'une laque sol-gel, en particulier d'une laque sol-gel à base de résine de silicone/silane, dans lequel la laque sol-gel présente de préférence une teneur en matières solides de 60 à 100 % en poids et/ou dans lequel la couche de couverture D facultative est une couche de couverture à base d'une laque autodurcissant sous l'effet de la chaleur et/ou d'un rayonnement électromagnétique, en particulier d'un rayonnement UV, et/ou dans lequel la couche de couverture D facultative est appliquée sur une zone de surface de l'élément en béton au moyen d'un procédé de pulvérisation, de laminage ou de couchage par voile.

13. Procédé selon l'une des revendications précédentes,
**caractérisé en ce que,** après l'impression et avant le durcissement, une couche de couverture D à base d'un laque thermodurcissante est appliquée sur la zone de surface imprimée de l'élément en béton, et/ou après le durcissement, une couche de couverture D à base d'une laque durcissant sous l'effet d'un rayonnement électromagnétique, en particulier d'un rayonnement UV, est appliquée sur la zone de surface imprimée de l'élément en béton.

14. Élément en béton, en particulier bloc de béton, dalle de béton ou marche en béton, lequel présente, au moins d'un côté visible, une impression intégrée dans le béton, **caractérisé en ce que** l'impression a été formée à l'aide d'une composition d'impression qui comprend un liant A et un colorant B et dans lequel le liant A contient un siloxane et un silane.

15. Élément en béton selon la revendication 14, **caractérisé en ce que** le liant A et/ou le colorant B est défini comme dans l'une des revendications 1 à 4 et/ou le côté visible imprimé de l'élément en béton présente au moins une couche de couverture D, la couche de couverture D étant de préférence définie comme dans l'une des revendications 11 à 13.
